# FASCICULE DE BREVET EUROPEEN

(11) **EP 0 522 050 B1**
(45) Date de publication et mention de la délivrance du brevet: **08.03.1995**
(21) Numéro de dépôt: 91907395.7
(22) Date de dépôt: 02.04.1991
(51) Int. Cl.: F16L 1/18, F16L 1/20

(54) **DISPOSITIF DE POSE DE CONDUITES TUBULAIRES COMPORTANT UNE PINCE MOBILE IMMERGEE ET PROCEDE UTILISANT UN TEL DISPOSITIF**
VORRICHTUNG ZUM VERLEGEN VON ROHRFÖRMIGEN LEITUNGEN MIT EINER UNTER DEM MEERESSPIEGEL LIEGENDEN KLEMME UND VERFAHREN UNTER ZUHILFENAHME DIESER VORRICHTUNG
DEVICE FOR LAYING TUBULAR CONDUITS COMPRISING A SUBMERGED MOBILE CLAMP AND PROCESS USING SAID DEVICE

(30) Priorité: 30.03.1990 FR 9004104
(43) Date de publication de la demande: 13.01.1993
(73) Titulaire: COFLEXIP, 92100 Boulogne-Billancourt (FR)
(72) Inventeur: MALOBERTI, René, F-94500 Champigny (FR); COUTAREL, Alain, F-75007 Paris (FR); ESPINASSE, Philippe, Houston, TX 77077 (US)
(74) Mandataire: Nony, Michel
(86) Numéro de dépôt international: FR9100262
(87) Numéro de publication internationale: WO9115698

(56) Documents cités:
- DE-A- 2 730 944
- FR-A- 2 430 385
- GB-A- 1 204 715
- GB-A- 2 052 673

## Description

L'invention se rapporte à un dispositif de pose de conduites tubulaires, notamment de conduites tubulaires flexibles ou de câbles, comportant notamment une pince mobile et au procédé utilisant un tel dispositif.

Il est connu d'utiliser des dispositifs de pose sur fonds marins de conduites tubulaires, ces dispositifs de pose comportant deux pinces montées sur un bâti, l'une étant fixe, et l'autre étant mobile par rapport au bâti. De tels dispositifs présentent un encombrement important et sont d'un pas faible, c'est-à-dire qu'ils permettent la pose d'une faible longueur de conduites tubulaires par cycle de fonctionnement comportant les étapes de libération successives de deux pinces.

Ainsi, FR-A-2 430 385 décrit un tel dispositif dans lequel la pince mobile est montée sur le même chassis que la pince fixe, la mobilité de la pince mobile étant obtenue par manoeuvre de vérins comportant une course très faible.

Les caractéristiques du dispositif et du procédé selon l'invention font l'objet des revendications 1 et respectivement 7.

Le dispositif selon la présente invention ne présente pas les inconvénients des dispositifs de type connu. En effet, l'utilisation d'une pince mobile immergée, permet d'obtenir une grande course se situant sous l'eau. La pince mobile n'occupe donc pas de place sur le support flottant de pose de conduites tubulaires. On obtient donc un dispositif d'encombrement réduit qui pourtant présente une course importante, par exemple comprise entre 30 et 100 m, typiquement 50 m. Il est à noter que les deux avantages du dispositif selon la présente invention, à savoir, l'encombrement réduit et le pas d'avancement important, étaient considérés comme tout à fait contradictoires et ne pouvant pas être atteints simultanément.

Le fait de disposer d'un dispositif peu encombrant, et pourtant performant, permet de le rajouter en tant que dispositif de pose complémentaire, par exemple sur une barge destinée à la pose de conduites tubulaires rigides. Ce dispositif permet de poser une canalisation comportant une conduite tubulaire rigide et une conduite tubulaire flexible raccordées. On peut ainsi bénéficier des qualités propres à chaque type de conduite tubulaire ou de bénéficier des avantages de leur procédé de pose. Par exemple, la conduite tubulaire rigide, dont le coût de revient est faible, est posée sur la partie du trajet où la pose d'un pipeline rigide ne présente aucun problème. On raccorde une conduite tubulaire flexible, par exemple pour la connexion à une plate-forme de production ou de forage. On bénéficie en plus des qualités propres de la conduite tubulaire flexible des performances élevées des navires poseurs évolués mis en oeuvre lors de la pose et comportant par exemple des dispositifs de positionnement dynamique. Seuls de tels navires peuvent travailler sans danger dans des zones encombrées.

Le procédé de pose selon la présente invention utilisera en particulier la barge, normalement destinée à la pose de conduites tubulaires rigides, pour poser une longueur de conduites tubulaires flexibles suffisante pour atteindre la surface.

L'extrémité de la conduite tubulaire flexible opposée à la conduite tubulaire rigide est, soit abandonnée sur le fond en vue de sa récupération ultérieure, soit transbordée à bord d'un navire perfectionné de pose de conduites tubulaires flexibles pour continuer les opérations de pose.

L'utilisation d'un navire poseur spécial pour la pose de conduites tubulaires flexibles permet d'autre part de bénéficier d'une pose extrêmement rapide par rapport à la pose de conduites tubulaires utilisant des barges.

Il est à noter que le dispositif de pose de conduites tubulaires rigides présent sur la barge ne convient pas normalement pour la pose de conduites tubulaires flexibles. En effet, le dispositif assurant le serrage lors de la descente de conduites tubulaires rigides ne permettrait pas d'immobiliser ou de freiner les conduites tubulaires flexibles lors de leur descente. Dans le dispositif selon la présente invention on utilise par exemple des pinces de serrage ou des colliers à mors dont l'ouverture et la fermeture sont commandées par des vérins.

Avantageusement, une pince immergée est mise en mouvement en utilisant des câbles d'acier enroulés sur des treuils.

Avantageusement, lorsque la pince immergée est libérée, on empêche sa rotation autour de la conduite tubulaire. Par exemple, la pince immergée est reliée à un contrepoids par un câble.

L'invention sera mieux comprise au moyen de la description ci-après et des figures annexées, données comme des exemples non limitatifs, parmi lesquels :
- la figure 1 est un schéma illustrant la pose de conduites tubulaires rigides homogènes;
- la figure 2 est un schéma illustrant la pose de conduites tubulaires flexibles ou de transition en conduites tubulaires rigides et conduites tubulaires flexibles.

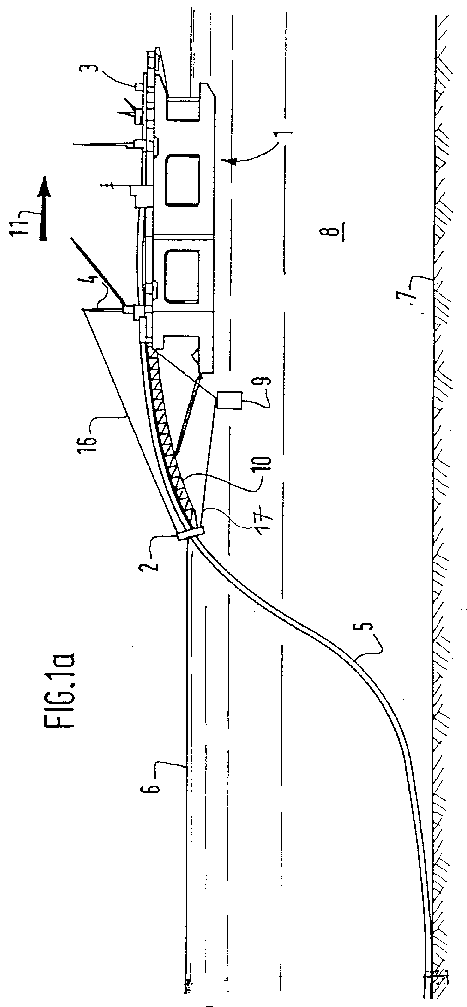

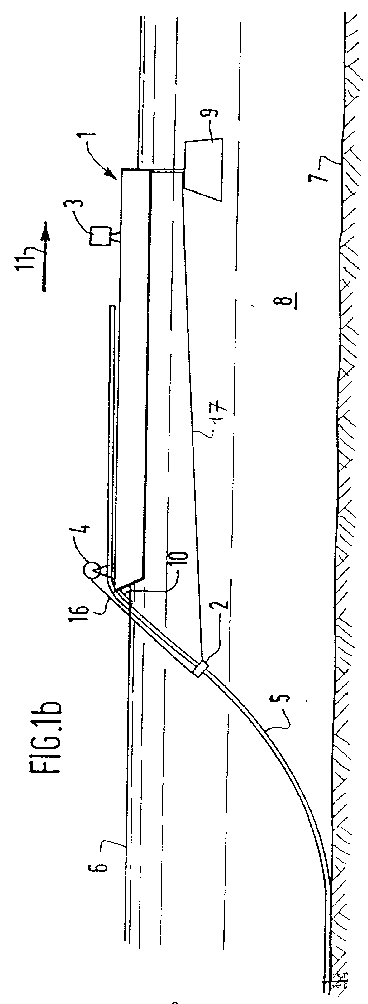

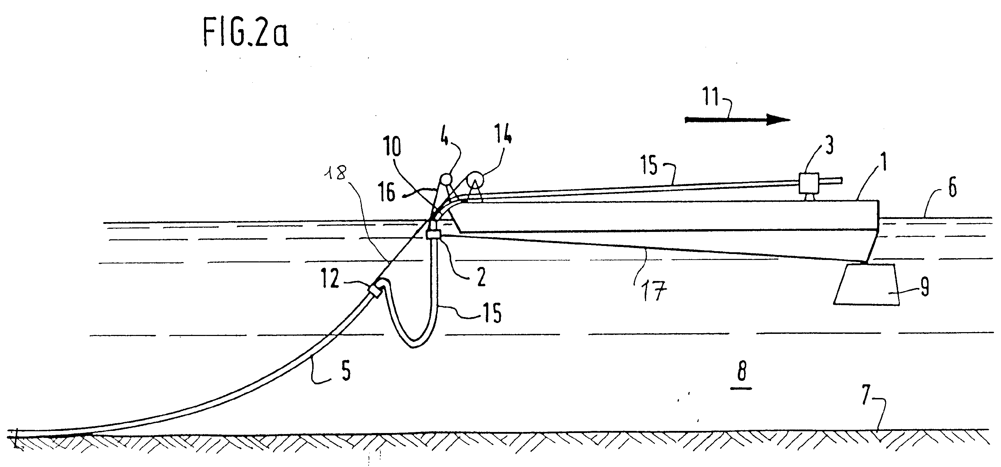

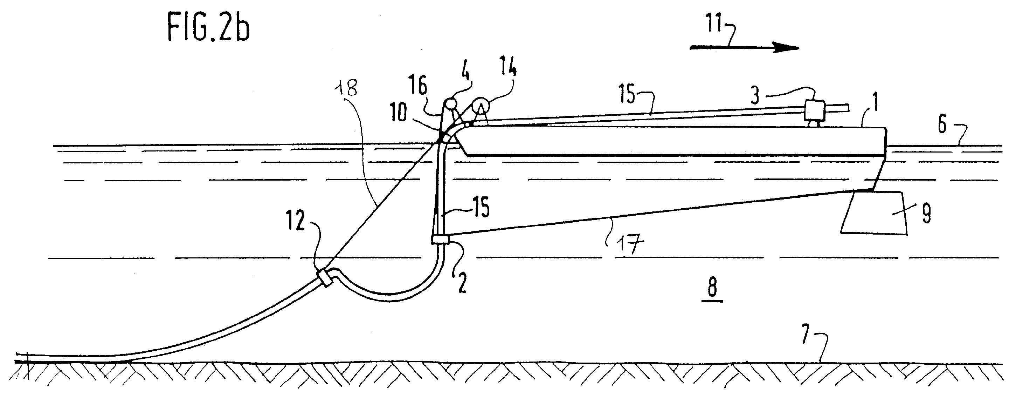

Sur les figures 1 et 2 on a utilisé les mêmes références pour désigner les mêmes éléments.

Sur la figure 1, on peut voir l'utilisation du dispositif selon la présente invention pour effectuer la pose de conduites tubulaires rigides 5, par exemple sur le fond 7 de la mer 8. Le dispositif selon la présente invention équipe, dans l'exemple illustré sur la figure 1, une barge 1 de pose de conduites tubulaires rigides. La barge 1 comporte un support en forme de rampe inclinée 10 permettant de donner l'inclinaison désirée à la conduite tubulaire 5 lorsqu'elle pénètre à la surface de l'eau 8. La barge 1 comporte une pince 3 située "à l'arrière" dans l'exemple non limitatif illustré sur la figure 1. Une pince 2, immergée, est reliée par des moyens de retenue 16 à des moyens de manoeuvre 4 permettant sa descente et/ou sa remontée. Les moyens 16 comportent par exemple un câble d'acier, tandis que les moyens 4 comportent par exemple un treuil. Avantageusement, le dispositif selon la présente invention est situé sur un côté de la barge 1. La conduite tubulaire rigide 5 prend sensiblement une forme en S.

Avantageusement, la pince immergée 2 est reliée, par exemple par un câble 17, à un contrepoids 9 accroché à la barge 1. Ainsi, elle gardera toujours la même orientation, même lors d'un déplacement, par exemple une remontée, la pince 2 n'étant pas serrée autour de la conduite tubulaire 5.

Pour assurer la descente de la conduite 5, on commence (Fig 1a) par serrer la pince 3 qui empêche la descente de la conduite tubulaire 5. On effectue le serrage de la pince 2 autour de la conduite tubulaire 5. Une fois la pince 2 serrée autour de la conduite tubulaire 5, on libère la pince fixe 3. On descend la pince 2 en déroulant les câbles d'acier 16 à partir du treuil 4. Simultanément, la barge 1 avance selon la flèche 11. Sur la figure 1b on a illustré la pince 2 dans sa position basse. On raccorde, par exemple par soudure, un nouveau tronçon a l'extrémité de la conduite tubulaire rigide 5. Ce tronçon est avantageusement d'une longueur sensiblement égale à la longueur de la barge 1. De même, la course de la pince 2 est sensiblement égale à la longueur de la barge 1 (contrairement à l'exemple illustré sur la figure 1). Une fois qu'un nouveau tronçon de la conduite tubulaire 5 a été raccordé (non illustré sur la figure 1b) on effectue le serrage de la pince 3. A ce moment là, on libère la pince 2 qui est remontée grâce au treuil 4 et au câble 16. Avantageusement, le câble 17 tendu entre la pince 2 et le contrepoids 9 empêche la rotation de la pince mobile 2 autour de la conduite tubulaire 5. Une fois la pince 2 en position haute, on se retrouve au début du cycle illustré sur la figure 1a.

Sur la figure 2, on peut voir un exemple de pose d'une canalisation comportant une conduite tubulaire rigide 5 et une conduite tubulaire flexible 15 raccordée. La longueur de la conduite tubulaire flexible raccordée 15 est légèrement supérieure à la profondeur du fond 7 pour tenir compte de la forme en chaînette de la conduite flexible. Une fois le raccord réalisé, la poursuite de la pose de conduites tubulaires flexibles 15 sera avantageusement réalisée par un navire spécialisé dans la pose de conduites tubulaires flexibles.

La conduite tubulaire rigide 5 est retenue par une seconde pince 12 reliée par un câble 18 à un treuil 14. La conduite tubulaire flexible 15 est retenue, d'une part par l'extrémité de la conduite rigide 5, et d'autre part par une pince immergée 2 et/ou par une pince 3 disposée sur la barge 1. La conduite tubulaire flexible 15 prend sensiblement une forme de chaînette sous l'effet de son poids.

Sur la figure 2a, on a illustré la pince immergée 2 dans sa position haute. Une fois la pince 2 serrée autour de la conduite tubulaire flexible 15, la pince 3 peut être déserrée. On effectue la descente simultanée de la conduite tubulaire rigide 5 en déroulant le câble 18 à partir du treuil 14, et la descente de la conduite tubulaire flexible 15 en déroulant le câble 16 à partir du treuil 4.

Sur la figure 2b, on a illustré la pince 2 dans sa position basse. A ce moment là, on serre la pince 3 autour de la conduite tubulaire flexible 15, on libère la pince 2 et on effectue la remontée de la pince 2. Dans l'exemple illustré sur la figure 2, la pince 3 est située près de l'avant (selon le sens de la flèche 11) du support flottant 1. Dans la pratique cela n'est pas du tout nécessaire. Au fur et à mesure que l'on descend la conduite tubulaire flexible 15, celle-ci est déroulée, par exemple à partir des moyens de stockage de type "panier" ou "touret" (non représenté sur la figure 2).

Avantageusement, lorsque la pince 12 a atteint le fond 7, on provoque sa libération et sa remontée avec le treuil 14.

Une fois l'extrémité de la conduite tubulaire rigide reposant sur le fond, on transborde avantageusement l'extrémité supérieure de la conduite tubulaire flexible 15 disponible sur le support flottant 1, sur un navire spécialisé dans la pose de conduites tubulaires flexibles, par exemple un navire de pose rapide comportant des moyens de positionnement dynamique. La suite des opérations de pose de conduites tubulaires flexibles sera opérée par l'intermédiaire de ce navire (non illustré sur les figures). Toutefois, l'abandon sur le fond de l'extrémité de la conduite tubulaire flexible 15 ne sort pas du cadre de la présente invention. Avantageusement, une telle extrémité abandonnée sur le fond comportera des moyens facilitant sa récupération comme par exemple des dispositifs de connexion et/ou des moyens de localisation. Les moyens de localisation comporteront par exemple une balise sonar. On utilisera par exemple une balise sonar passive pour des abandons de longue durée, et une balise sonar active pour des abandons de courte durée.

## Revendications

1. Dispositif de pose d'une conduite tubulaire sur le fond sous-marin, comportant un support flottant et une paire de pinces pouvant assumer chacune une position ouverte et une position fermée autour de la conduite tubulaire et actionnables en alternance pour assurer la pose pas-à-pas de la conduite, chacune des pinces, en position fermée, étant apte à assurer les efforts de retenue de la conduite à poser, l'une des pinces (3) étant disposée sur le support flottant (1), et l'autre pince (2) étant immergée et reliée au support flottant par des moyens de retenue (16) associés à des moyens de manoeuvre (4) disposés sur le support flottant et agencés pour :
- lorsque ladite pince immergée (2) est en position fermée, provoquer la descente de ladite pince (2) enserrant la conduite tubulaire (5,15) et permettre l'immersion d'une longueur correspondante de la conduite tout en assurant la reprise de la traction axiale exercée par la conduite et,
- lorsque ladite pince immergée (2) est en position ouverte, assurer la remontée de ladite pince immergée par coulissement de celle-ci autour de ladite conduite.

2. Dispositif selon la revendication 1, caractérisé par le fait que ladite pince immergée (2) présente une forme d'anneau au moins partiel.

3. Dispositif selon l'une quelconque des revendications 1 et 2, caractérisé par le fait que les moyens de retenue sont des câbles (16), et les moyens de manoeuvre comportent un treuil (4).

4. Dispositif selon l'une quelconque des revendications précédentes, caractérisé par le fait qu'il comporte des moyens (9) pour empêcher la rotation autour de l'axe longitudinal de la conduite de la pince immergée (2) lors de sa remontée.

5. Dispositif selon la revendication 4, caractérisé par le fait que lesdits moyens pour empêcher la rotation de la pince immergée comportent un contrepoids (9) relié à ladite pince immergée (2).

6. Dispositif selon l'une quelconque des revendications 1 à 5, caractérisé par le fait que la conduite tubulaire est une conduite tubulaire flexible raccordée à l'extrémité d'une conduite tubulaire rigide préalablement posée, le dispositif comportant une autre pince (12) apte à assumer une position ouverte et une position fermée, ladite autre pince (12) étant mise en place sur la conduite tubulaire rigide au voisinage de son raccordement avec la conduite tubulaire flexible et étant reliée au support flottant par des moyens de retenue associés à des moyens de manoeuvre (14) disposés sur le support flottant.

7. Procédé de pose d'une conduite tubulaire sur le fond sous-marin utilisant le dispositif selon l'une quelconque des revendications précédentes, caractérisé par le fait qu'il comporte au moins un cycle consistant à :
- serrer la pince immergée (2) autour d'une conduite tubulaire (5,15) ;
- libérer la pince (3) disposée sur le support flottant ;
- actionner les moyens de manoeuvre (4) pour descendre la pince immergée (2) et permettre l'immersion d'une longueur correspondante de conduite ;
- arrêter la descente ;
- serrer la pince (3) disposée sur le support flottant autour de la conduite tubulaire ;
- libérer la pince immergée (2) ;
- actionner les moyens de manoeuvre (4) pour remonter la pince immergée (2).

## Patentansprüche

1. Vorrichtung zum Verlegen einer Rohrleitung auf dem Meeresboden, mit einem schwimmenden Träger und einem Paar Klemmen, die jeweils eine offene Stellung und eine geschlossene Stellung um die Rohrleitung einnehmen können und die abwechselnd betätigt werden können, um für eine schrittweise Verlegung der Leitung zu sorgen, wobei jede der Klemmen in der geschlossenen Stellung dazu in der Lage ist, für die Rückhaltekräfte auf die zu verlegende Leitung zu sorgen, wobei die eine der Klemmen (3) auf dem schwimmenden Träger (1) angeordnet ist und die andere Klemme (2) versenkt ist und über eine mit einer Bedienungseinrichtung (4) versehene Rückhalteeinrichtung (16) mit dem schwimmenden Träger verbunden ist, wobei die Bedienungseinrichtung auf dem schwimmenden Träger angeordnet ist und so ausgebildet ist, daß sie folgendes ausführt:
- wenn die genannte versenkte Klemme (2) in ihrer geschlossenen Stellung steht, bewirkt sie das Absenken der genannten, die Rohrleitung (5, 15) umschließenden Klemme (2), und sie ermöglicht das Versenken eines entsprechenden Stücks der Leitung, wobei sie für das Auffangen des durch die Leitung ausgeübten axialen Zugs sorgt, und
- wenn die genannte versenkte Klemme (2) in ihrer offenen Stellung steht, sorgt sie für das Wiederhochziehen der versenkten Klemme durch Gleiten derselben um die genannte Leitung.

2. Vorrichtung nach Anspruch 1, **dadurch gekennzeichnet,** daß die versenkte Klemme (2) zumindest teilweise die Form eines Rings aufweist.

3. Vorrichtung nach einem der Ansprüche 1 oder 2, **dadurch gekennzeichnet,** daß die Rückhalteeinrichtung aus Kabeln (16) besteht und die Bedienungseinrichtung eine Winde (4) aufweist.

4. Vorrichtung nach einem der vorstehenden Ansprüche, **dadurch gekennzeichnet,** daß sie eine Einrichtung (9) zum Verhindern einer Umdrehung der versenkten Klemme (2) bei deren Wiederhochziehen um die Längsachse der Leitung aufweist.

5. Vorrichtung nach Anspruch 4, **dadurch gekennzeichnet,** daß die genannte Einrichtung zum Verhindern des Verdrehens der versenkten Klemme ein Gegengewicht (2) aufweist, das mit der genannten versenkten Klemme (2) verbunden ist.

6. Vorrichtung nach einem der Ansprüche 1 bis 5, **dadurch gekennzeichnet,** daß die Rohrleitung eine flexible Rohrleitung ist, die mit dem Ende einer zuvor verlegten festen Rohrleitung verbunden ist, wobei die Vorrichtung eine andere Klemme (12) aufweist, die eine offene Stellung und eine geschlossene Stellung einnehmen kann, wobei die andere Klemme (12) an der festen Rohrleitung in der Nähe deren Verbindung mit der flexiblen Rohrleitung angebracht ist und sie über eine Rückhalteeinrichtung, die einer auf dem schwimmenden Träger angeordneten Bedienungseinrichtung (14) zugeordnet ist, mit dem schwimmenden Träger verbunden ist.

7. Verfahren zum Verlegen einer Rohrleitung auf dem Meeresboden unter Verwendung der Vorrichtung nach einem der vorstehenden Ansprüche, **dadurch gekennzeichnet,** daß es über mindestens einen Zyklus verfügt, der aus folgendem besteht:
- Umschließen der versenkten Klemme (2) um die Rohrleitung (5, 15);
- Freigeben der auf dem schwimmenden Träger angeordneten Klemme (3);
- Betätigen der Bedienungseinrichtung (4) zum Absenken der versenkten Klemme (2) und zum Ermöglichen des Versenkens eines entsprechenden Stücks der Leitung;
- Anhalten des Absenkens;
- Umschließen der auf dem schwimmenden Träger angeordneten Träger (3) um die Rohrleitung;
- Freigeben der versenkten Klemme (2);
- Betätigen der Bedienungseinrichtung (4) zum Wiederhochziehen der versenkten Klemme (2).

## Claims

1. A device for laying a tubular conduit on the seabed, comprising a floating support and a pair of clamps, each being capable of assuming an open position and a closed position round the tubular conduit and which can be actuated alternately to ensure the stepwise laying of the conduit, each one of the clamps being capable in the closed position of providing the foroes for retaining the conduit to be laid, one of the clamps (3) being disposed on the floating support (1), and the other clamp (2) being submerged and connected to the floating support by retaining means (16) associated with operating means (4) that are disposed on the floating support and set up for :
- causing the said submerged clamp (2) gripping the tubular conduit (5, 15) to be lowered when the said submerged clamp (2) is in its closed position and to permit the submersion of a corresponding length of the conduit, while ensuring that the axial pull exerted by the conduit is taken up and
- ensuring that the said submerged clamp is raised up by its sliding round the said conduit when the said submerged clamp (2) is in its open position.

2. A device according to claim 1, characterized in that the said submerged clamp (2) has the shape of at least part of a ring.

3. A device according to any one of claims 1 and 2, characterized in that the retaining means are cables (16) and the operating means include a winch (4).

4. A device according to any one of the preceding claims, characterized in that it includes means (8) for preventing the submerged clamp (2) from rotating round the longitudinal axis of the conduit while it is being raised up.

5. A device according to claim 4, characterized in that the said means for preventing the rotation of the submerged clamp include a counterweight (8) that is connected to the said submerged clamp (2).

6. A device according to any one of claims 1 to 5, characterized in that the tubular conduit is a flexible tubular conduit joined to the end of a rigid tubular conduit that has been previously laid, the device including another clamp (12) that is capable of assuming an open position and a closed position, the said other clamp (12) being placed in position on the rigid tubular conduit in the vicinity of its connection to the flexible tubular conduit and being connected to the floating support by retaining means associated with operating means (14) disposed on the floating support.

7. A process for laying a tubular conduit on the sea bed using the device according to any one of the preceding claims, characterized in that it includes at least one cycle consisting of:
- tightening the submerged clamp (2) round a tubular conduit (5, 15);
- releasing the clamp (3) disposed on the floating support;
- actuating the operating means (4) for causing the submerged clamp (2) to be lowered permitting the submersion of a corresponding length of the conduit;
- stopping the descent;
- tightening the clamp (3) disposed on the floating support round the tubular conduit;
- releasing the submerged clamp (2);
- actuating the operating means (4) for raising the submerged clamp (2).
